# EUROPÄISCHE PATENTSCHRIFT

(11) **EP 3 784 831 B1**
(45) Veröffentlichungstag und Bekanntmachung des Hinweises auf die Patenterteilung: **25.09.2024**
(21) Anmeldenummer: 19712980.2
(22) Anmeldetag: 21.03.2019
(51) Int. Cl.: D21B 1/34

(54) **STOFFAUFLÖSER**
PULPER
DÉSINTÉGRATEUR

(30) Priorität: 23.04.2018 DE 102018109634
(43) Veröffentlichungstag der Anmeldung: 03.03.2021
(73) Patentinhaber: Voith Patent GmbH, 89522 Heidenheim (DE)
(72) Erfinder: LÜDTKE, Oliver, 88213 Ravensburg (DE)
(74) Vertreter: Voith Patent GmbH - Patentabteilung
(86) Internationale Anmeldenummer: PCT/EP2019/057022
(87) Internationale Veröffentlichungsnummer: WO 2019/206530

(56) Entgegenhaltungen:
- EP-A1- 1 609 904
- EP-A1- 1 679 403
- DE-B3- 10 248 261
- US-A- 3 073 535
- US-A- 5 665 207

## Beschreibung

Die Erfindung betrifft einen Stofflöser zum Umwälzen einer, in einem Behälter enthaltenen Faserstoffsuspension mit wenigstens einem Sieb, dessen mit Sieböffnungen versehene Siebfläche von einem Rotor überstrichen wird, wobei der Rotor von einem Rotorkopf gebildet wird, an dem am Außenumfang mehrere Rotorflügel befestigt sind und der von den Rotorflügeln überstrichene Rotorkreis des Siebes mehrere leistenförmige Erhebungen aufweist.

Stofflöser werden zur Bearbeitung von Faserrohstoffen eingesetzt, die in Form einer Faserstoffsuspension in einer Maschine zur Herstellung einer Faserstoffbahn, insbesondere einer Papierbahn verwendet werden soll. Als Faserrohstoffe können dabei beispielsweise Frischfasern oder Altpapierfasern zum Einsatz kommen. Der Stofflöser und nachfolgende Vorrichtungen sollen hierzu die Faserrohstoffe zu Einzelfasern zerkleinern.

Im Allgemeinen weisen Stofflöser eine Siebplatte mit einem Rotor auf, welcher den Faserrohstoff zerkleinern und im Wasser suspendieren soll.

Der Gutstoff passiert die Sieböffnungen während die unerwünschten Substanzen, wie Fremdstoffe vom Sieb zurückgehalten und ausgeschleust werden.

Die auf solchen Sieben aufgesetzten Leisten sollen zumeist das Siebelement vor Verschleiß schützen. Sie werden daher auch oft aus besonders verschleißfähigem Material, z.B. Hartmetall, hergestellt. Neben der verschleißmindernden Wirkung können sie aber auch die Funktion der Sortiervorrichtung verbessern. Da die Rotorflügel relativ dicht an dem Siebelement vorbeibewegt werden, können durch die Relativbewegung zusätzliche Wirbel erzeugt werden, die die Freihaltung der Sortieröffnung begünstigen. Bei stippenhaltigem Faserstoff kann durch Zusammenwirkung von Rotorflügel und Leiste eine durchaus wünschenswerte Auflösung der Stippen erzielt werden.

Infolge des Verschleißes vergrößert sich jedoch der Abstand zwischen den Rotorflügeln und den Leisten sowie der Siebfläche, was sich negativ auf die Auflösung und die Freihaltung der Siebfläche und damit auch auf den spezifischen Energiebedarf der gesamten Altpapieraufbereitungsanlage auswirkt. Mit zunehmender Verschmutzung der Rohstoffe steigt zudem der Verschleiß, so dass die Elemente häufig gewechselt werden müssen.

Aus der DE 102 48 261 B3 ist eine Vorrichtung zum Zerkleinern von Material mit einem Sieb 18 und einem damit zusammenwirkenden drehbar angeordneten Rotor mit Rotorarmen bekannt. Die Rotorarme weisen an ihren der Drehrichtung und dem Sieb zugewandten Kantenbereichen Werkzeugkörper auf. Die Werkzeuge erstrecken sich in der Längsrichtung der Rotorarme und bilden eine Schneidkante. Um eine einfache Bauweise mit hoher Lebensdauer zu erreichen, sind an den Sieblocheingängen Lochränder aus Hartmaterial mit Lochrandkanten an den Siebkörper 18a angesetzt und materialschlüssig mit dem Sieblochkörper 18a verbunden. Darüber hinaus ist aus dieser Schrift eine andere Variante des Rotors bekannt. Die der Drehrichtung zugewandte Vorderseite der Rotorarme ist in der Drehrichtung 36 entgegengesetzt gekrümmt. Durch die Krümmung wird eine verringerte Winkelabnahme oder ein im Wesentlichen konstanter Winkel zwischen Schneidkante des Rotorflügels und den radial angeordneten Störleisten für einen ruhigeren Lauf des Rotors erzielt.

Die Aufgabe der Erfindung ist es daher, die Auflösung bei möglichst geringem Verschleiß sowie möglichst geringem Energiebedarf zu verbessern.

Erfindungsgemäß wurde die Aufgabe durch die Merkmale des Anspruchs 1 gelöst.

Hierdurch wird erreicht, dass der Schmutz entlang der Scherkante der Erhebung radial nach außen wandern kann und nicht zwischen Rotorflügel und Erhebung eingeklemmt wird. Dies fördert die Freihaltung des Siebes und mindert den Verschleiß. Außerdem wirkt dies einer weiteren Zerkleinerung der Störstoffe, insbesondere von Plastikteilen entgegen, die so leichter ausgeschleust werden können. Die geringere Zerkleinerung hat auch prozesstechnische und energetische Vorteile.

Von Bedeutung ist die Größe, Geschwindigkeit und Bahnlinie der Schmutzteile. Ist es kleiner als der Abstand zwischen Rotor und Erhebung, so ist es in der Regel auch kleiner als die Perforation im Sieb und führt zu keinen großen Problemen.

Ist das Schmutzteil dagegen größer, so soll es nunmehr nach außen abgeführt und nicht zwischen Rotor und Erhebung bzw. Sieb eingeklemmt werden.

Die Schmutzteile werden sowohl durch Schleppkräfte in der Suspension als auch durch Kontakt mit dem Rotor auf eine gewisse Geschwindigkeit gebracht.

Dabei sind zwei Fälle zu unterschieden.

Im ersten Fall befindet sich das Schmutzteil nicht in unmittelbarer Nähe zum Rotor und wird durch die umgebende Suspension mitgeschleppt. Die Kräfte auf das Schmutzteil, sowie die Kräfte vom Schmutzteil auf das Sieb bzw. die Erhebungen sind dann auf die Schleppkräfte in der Suspension begrenzt. Der dadurch hervorgerufene Verschleiß an Erhebungen bzw. an dem Sieb ist gering. Eine Zerkleinerung des Schmutzteiles selbst wird in der Regel nicht stattfinden.

Beim zweiten Fall kommt es zum direkten Kontakt zwischen Rotor, Schmutzteil und Erhebung bzw. Sieb, wobei die eingetragenen Kräfte deutlich ansteigen können. Daher kommt hier die erfindungsgemäße Ausbildung der Erhebungen zum Tragen.

Oft genügt es bereits, wenn der Schnittwinkel zwischen Arbeitskante und Scherkante radial nach außen gleich bleibt. Zur Erzielung des gewünschten Effektes ist es allerdings dabei vorteilhaft, wenn der Schnittwinkel zwischen Arbeitskante und Scherkante über mindestens 2/3 der Länge der Arbeitskante oder sogar über die gesamte Länge der Arbeitskante radial nach außen gleich bleibt.

Der geringste Verschleiß bei den Erhebungen stellt sich dann ein, wenn der gleichbleibende Schnittwinkel zwischen der Arbeitskante des Rotors und der Scherkante der Erhebung 90° beträgt, da dann die Fasern und Störstoffe parallel zur jeweiligen Erhebung radial nach außen transportiert wird.

Der Transport der Störstoffe radial nach außen kann allerdings verstärkt werden, indem der Schnittwinkel zwischen Arbeitskante und Scherkante radial nach außen größer wird. Die Störstoffe werden aus dem Zwickel weggeschoben.

Hierbei ist es von Vorteil, wenn der Schnittwinkel zwischen Arbeitskante und Scherkante über mindestens 2/3 der Länge der Arbeitskante oder sogar über die gesamte Länge der Arbeitskante radial nach außen größer wird.

Für die Stoffauflösung und den Verschleiß hat es sich dabei als optimal erwiesen, wenn der Schnittwinkel zwischen Arbeitskante und Scherkante zwischen 80 und 120°, vorzugsweise zwischen 80 und 110° liegt. Abhängig von Faserstoff und Prozessstufe kann dabei die Geometrie der Erhebungen so angepasst werden, dass eine stärker entstippende oder stärker reinigende Wirkung erzielt wird.

Je nach Art des Faserrohstoffs oder der Form und Größe des Behälters, der Siebfläche oder des Rotors kann es dabei vorteilhaft sein, wenn die Arbeitskante der Rotorflügel im Bereich der überstrichenen Siebfläche und/oder die Scherkante der Erhebungen zumindest überwiegend gerade verläuft oder zumindest überwiegend von geraden Abschnitten gebildet wird oder zumindest überwiegend gekrümmt verläuft.

Hinsichtlich der Belastung und des Verschleißes aber auch zur Vereinfachung der Konstruktion ist es von Vorteil, wenn das Sieb starr ausgebildet ist.

Dabei kann es in Abhängigkeit von der Größe des Behälters oder der Art und dem Ort des Rotors von Vorteil sein, wenn die Siebfläche gekrümmt oder eben ist.

Im Interesse einer einfachen Konstruktion genügt es oft bereits, wenn die Breite der Erhebungen in Rotationsrichtung radial nach außen gleich bleibt.

Allerdings kann es insbesondere in Abschnitten mit höherem Verschleiß der Erhebungen, beispielsweise bei radial nach außen größer werdendem Schnittwinkel zwischen Arbeitskante und Scherkante vorteilhaft sein, dass auch die Breite der Erhebungen in Rotationsrichtung zumindest abschnittsweise radial nach außen größer wird.

Für eine effiziente Auflösung sollten sich wenigstens einige, vorzugsweise alle Erhebungen radial nach außen über die gesamte Länge der Arbeitskanten erstrecken.

Jedoch kann es insbesondere bei ungleichmäßigem Verschleiß der Erhebungen von Vorteil sein, wenn sich wenigstens einige Erhebungen radial nach außen nur über einen Abschnitt der Arbeitskanten erstrecken.

Nachfolgend soll die Erfindung an einem Ausführungsbeispiel näher erläutert werden. In der beigefügten Zeichnung zeigt:
Figur 1: einen schematischen Längsschnitt durch einen Stofflöser;
Figur 2: einen Teilschnitt durch das Sieb 3 des Stofflösers;
Figur 3: eine Draufsicht auf das Sieb 3 mit Rotor 5
Figur 4: eine andere Teil-Draufsicht auf das Sieb 3 und Rotor 5 mit gleichbleibendem und abschnittsweise größer werdendem Schnittwinkel 9;
Figur 5: eine Teil-Draufsicht auf das Sieb 3 und Rotor 5 mit geraden Arbeitskanten 11;
Figur 6: eine Teil-Draufsicht auf das Sieb 3 mit breiter werdenden Erhebungen 8;
Figur 7: eine Draufsicht auf das Sieb 3 mit sich nur über einen radialen Abschnitt erstreckenden Erhebungen 8;
Figur 8: eine Teil-Draufsicht auf das Sieb 3 und Erhebungen 8 mit profilierter Scherkante 12 und
Figur 9: eine Teil-Draufsicht auf das Sieb 3 und Erhebungen 8 mit geraden Abschnitten.

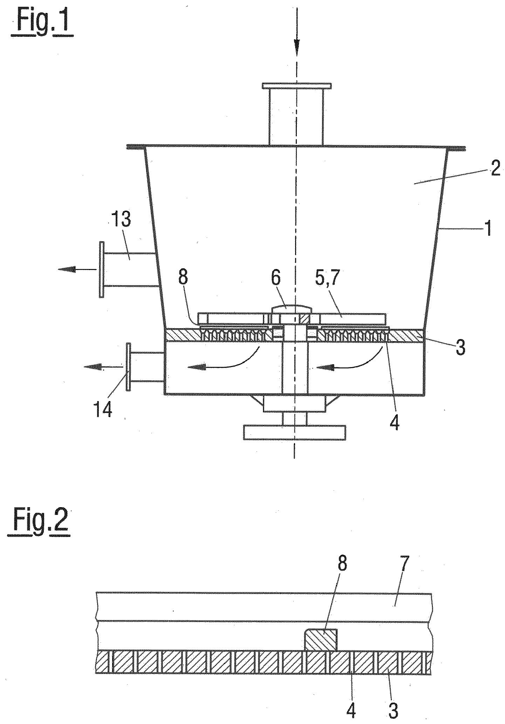

Der Stofflöser wird, wie in Figur 1 gezeigt, von einem oben offenen, zylindrischen Behälter 1 gebildet, in den der Faserrohstoff sowie Wasser gegeben werden. Für die Durchmischung und Zerkleinerung des Faserrohstoffs sowie die Suspendierung im Wasser sorgt ein antreibbarer Rotor 5 mit mehreren Rotorflügeln 7. Dabei beträgt die Stoffdichte im Stofflöser zwischen 2 und 7%.

Der Behälter 1 wird durch das Sieb 3 in zwei Kammern unterteilt. Das am Sieb 3 Abgewiesene wird durch den Auslaufstutzen 13 abgeleitet.

Der durch die Sieböffnungen 4 über den Gutstoffstutzen 14 abgezogene Gutstoff in Form der Faserstoffsuspension 2 wird in nachfolgenden Vorrichtungen weiterbehandelt und in einer Papiermaschine zu Papierbahnen verarbeitet.

Der Rotor 5 bzw. dessen Rotorflügel 7 überstreichen während der Rotation eine mit Sieböffnungen 4 versehene Siebfläche eines Siebes 3 und verhindern so deren Verstopfen. Meist befindet sich das Sieb 3 mit dem davor liegenden Rotor 5 am Boden des Behälters 1, wie in Figur 1 zu sehen.

Es kann jedoch auch von Vorteil oder notwendig sein, dieses an einer Behälterwand anzuordnen. Derartige, liegende Stofflöser kommen insbesondere unterhalb der Papiermaschine bei der Ausschussbehandlung zur Anwendung.

Wegen der Belastung des Siebes 3 und zur Vereinfachung der Herstellung ist dieses eben und starr ausgebildet. Die Sieböffnungen 4 sind kreisrund, wobei beispielsweise jedoch auch ovale oder bohnenförmige Formen möglich sind.

Der Rotor 5 sorgt einerseits für die Auflösung des Faserrohstoffs sowie die Entstippung und andererseits für das Abräumen eventueller Stör- oder Fremdstoffe von der Siebfläche. Dabei steht die Rotationsachse des Rotors 5 senkrecht auf der Siebfläche. Der Rotor 5 besitzt einen relativ großen Rotorkopf 6, an dessen Außenumfang beispielhaft sechs Rotorflügel 7 befestigt sind. Über den großen Rotorkopf 6 kann der Bildung von Kappen aus nicht aufgelöstem, mitlaufendem Rohstoff (Platten oder Bällen) wirksam begegnet werden.

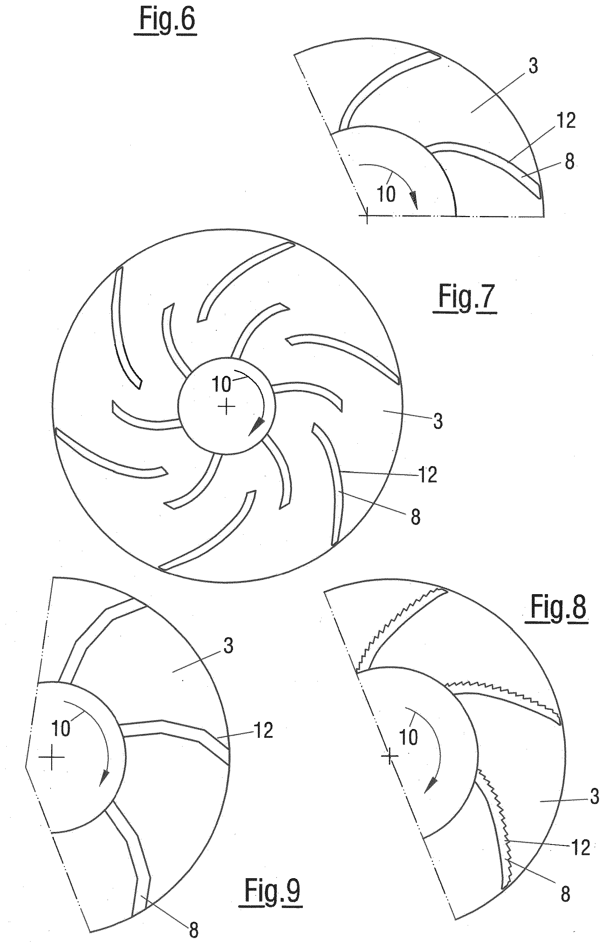

Auf der dem Rotor 5 zugewandten Seite ist das Sieb 3 gemäß Figur 1 und 2 mit leistenförmigen Erhebungen 8 versehen, was die Auflöse- und Reinigungswirkung verstärkt. Bei nur gering verschmutzten Rohstoffen können die Erhebungen 8, wie in Figur 8 zu erkennen, auch profilierte, hier sägezahnartige Scherkanten 12 besitzen, was die Entstippung verbessert. Diese leistenförmigen Erhebungen 8 weisen eine Höhe von mindestens 2 mm über der Sieboberfläche auf und können einstückig mit dem Sieb 3 oder als separates Element ausgebildet sein oder jeweils von einer Schweißraupe gebildet werden.

Um den Einsatz bei möglichst vielen Rotor-Gestaltungen zu vereinfachen, kann es vorteilhaft sein, die Erhebungen 8 gemäß Figur 9 aus mehreren geraden Abschnitten zusammenzusetzen, auch wenn dadurch der Schnittwinkel 9 nur abschnittsweise konstant bleibt und/oder abschnittsweise größer wird.

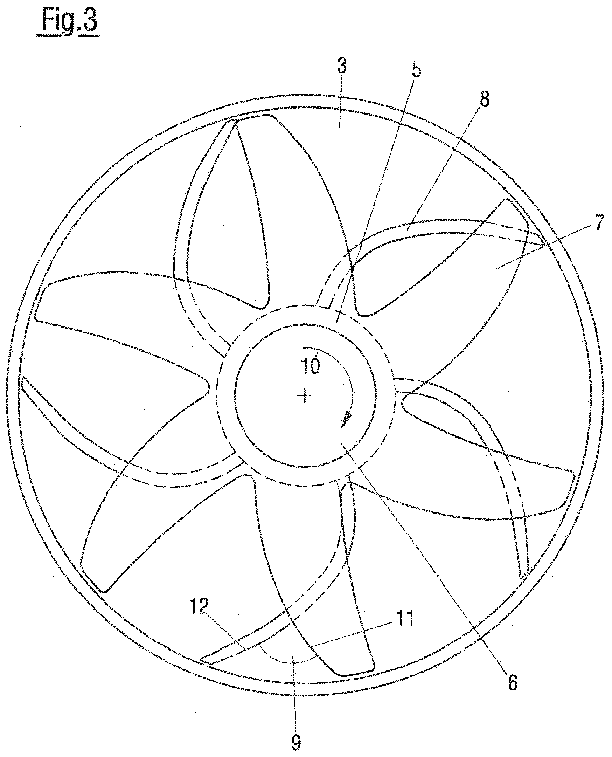

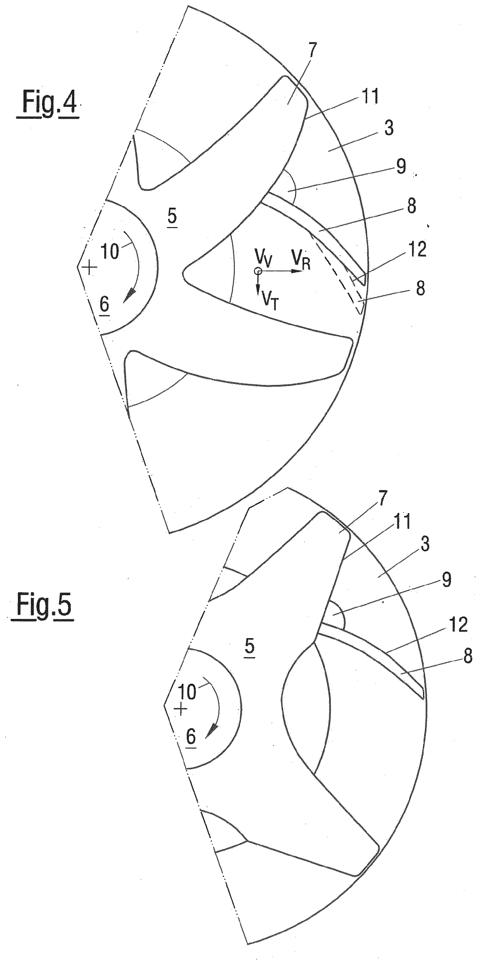

Die in Rotationsrichtung 10 des Rotors 5 weisende Arbeitskanten 11 der Rotorflügel 7 ist, wie in Figur 3 zu erkennen, in Rotationsrichtung 10 konvex gekrümmt. Bei Bedarf können die Arbeitskanten 11 aber entsprechend Figur 5 ganz oder zumindest teilweise auch gerade Abschnitte aufweisen.

Erfindungswesentlich ist jedoch, dass der Schnittwinkel 9 zwischen der Arbeitskante 11 der Rotorflügel 7 und der entgegen der Rotationsrichtung 10 weisenden Scherkante 12 der Erhebungen 8 über die gesamte radiale Erstreckung der Erhebungen 8 radial nach außen gleich bleibt oder, wie in Figur 3 dargestellt, radial nach außen größer wird und zwischen 90 und 110 ° liegt.

Figur 4 zeigt hierzu eine weitere Variante, bei der der Schnittwinkel 9 bei der mit durchgehender Linie dargestellten Erhebung 8 gleich bleibt und bei der mit unterbrochener Linie dargestellten Erhebung 8 in einem radial äußeren Anschnitt des Siebes 3 größer wird.

Insbesondere in Abschnitten mit höherem Verschleiß der Erhebungen 8, beispielsweise bei radial nach außen größer werdendem Schnittwinkel 9 zwischen Arbeitskante 11 und Scherkante 12 kann es vorteilhaft sein, wenn die Breite der Erhebungen 8, wie in Figur 6 zu sehen, radial nach außen größer wird.

Im Unterschied hierzu zeigt Figur 7 eine Lösung, bei der sich die Erhebungen 8 nur über einen radialen Abschnitt des Siebes 3 erstrecken. Dies erlaubt Optimierungen insbesondere bei ungleichmäßigem Verschleiß der Erhebungen 8.

Unabhängig von der speziellen Gestaltung von der Arbeitskante 11 des Rotors 5 und der Scherkante 12 der Erhebungen 8 wird allgemein gewährleistet, dass die Störstoffe von den Arbeitskanten 11 der Rotorflügel 7 an den Scherkanten 12 der Erhebungen 8 entlang radial nach außen geschoben werden. Dementsprechend vermindert sich die Gefahr, dass Schmutz zwischen Rotorflügel 7 und Erhebung 8 eingeklemmt wird, was sich entsprechend positiv auf den Verschleiß auswirkt.

Außerdem erfolgt so auch eine Optimierung der Schlepp- und Scherkräfte verbunden mit einer verbesserten Auflösung bei vermindertem Energieverbrauch.

## Patentansprüche

1. Stofflöser zum Umwälzen einer, in einem Behälter (1) des Stoffauflösers enthaltenen Faserstoffsuspension (2) mit wenigstens einem Sieb (3), dessen mit Sieböffnungen (4) versehene Siebfläche von einem Rotor (5) überstrichen wird, wobei der Rotor (5) von einem Rotorkopf (6) gebildet wird, an dem am Außenumfang mehrere Rotorflügel (7) befestigt sind und der von den Rotorflügeln (7) überstrichene Rotorkreis des Siebes (3) mehrere leistenförmige Erhebungen (8) aufweist, wobei der Schnittwinkel (9) zwischen der in Rotationsrichtung (10) weisenden Arbeitskante (11) der Rotorflügel (7) und der entgegen der Rotationsrichtung (10) weisenden Scherkante (12) der Erhebungen (8) radial nach außen zumindest abschnittsweise konstant bleibt und/oder zumindest abschnittsweise größer wird und wobei der Schnittwinkel (9) zwischen Arbeitskante (11) und Scherkante (12) zwischen 80 und 120 ° liegt.

2. Stofflöser nach Anspruch 1, wobei der Schnittwinkel (9) zwischen Arbeitskante (11) und Scherkante (12) über mindestens 2/3 der Länge der Arbeitskante (11) radial nach außen gleich bleibt.

3. Stofflöser nach Anspruch 1 oder 2, wobei der Schnittwinkel (9) zwischen Arbeitskante (11) und Scherkante (12) über die gesamte Länge der Arbeitskante (11) radial nach außen gleich bleibt.

4. Stofflöser nach einem der vorhergehenden Ansprüche, wobei der gleichbleibende Schnittwinkel (9) zwischen Arbeitskante (11) und Scherkante (12) 90° beträgt.

5. Stofflöser nach Anspruch 1, wobei der Schnittwinkel (9) zwischen Arbeitskante (11) und Scherkante (12) über mindestens 2/3 der Länge der Arbeitskante (11) radial nach außen größer wird.

6. Stofflöser nach Anspruch 1, wobei der Schnittwinkel (9) zwischen Arbeitskante (11) und Scherkante (12) über die gesamte Länge der Arbeitskante (11) radial nach außen größer wird.

7. Stofflöser nach einem der vorhergehenden Ansprüche, wobei der Schnittwinkel (9) zwischen Arbeitskante (11) und Scherkante (12) zwischen 80 und 110 ° liegt.

8. Stofflöser nach einem der vorhergehenden Ansprüche, wobei die Arbeitskante (11) der Rotorflügel (7) zumindest überwiegend gerade verläuft.

9. Stofflöser nach einem der Ansprüche 1 bis 7, wobei die Arbeitskante (11) der Rotorflügel (7) zumindest überwiegend von mehreren geraden Abschnitten gebildet wird.

10. Stofflöser nach einem der Ansprüche 1 bis 7, wobei die Arbeitskante (11) der Rotorflügel (7) zumindest überwiegend gekrümmt verläuft.

11. Stofflöser nach einem der vorhergehenden Ansprüche, wobei die Breite der Erhebungen (8) in Rotationsrichtung (10) radial nach außen gleich bleibt.

12. Stofflöser nach einem der Ansprüche 1 bis 11, wobei die Breite der Erhebungen (8) in Rotationsrichtung (10) zumindest abschnittsweise radial nach außen größer wird.

13. Stofflöser nach einem der vorhergehenden Ansprüche, wobei sich wenigstens einige Erhebungen (8) radial nach außen über die gesamte Länge der Arbeitskanten (11) erstrecken.

14. Stofflöser nach einem der vorhergehenden Ansprüche, wobei die Scherkante (12) wenigstens einiger Erhebungen (8) profiliert ausgebildet ist.

15. Stofflöser nach einem der Ansprüche 1 bis 12, wobei die Scherkante (12) der Erhebungen (8) zumindest überwiegend gekrümmt verläuft.

## Claims

1. Pulper for circulating a fibre suspension (2) contained in a container (1) of the pulper having at least one sieve (3), the sieve surface of which is provided with sieve openings (4) and is swept by a rotor (5), wherein the rotor (5) is formed by a rotor head (6), to which multiple rotor blades (7) are fastened on the circumference and the rotor circle of the sieve (3) swept by the rotor blades (7) has multiple strip-like elevations (8), wherein the cutting angle (9) between the working edge (11) of the rotor blades (7) in the rotation direction (10) and the shear edge (12) of the elevations (8) against the rotation direction (10) remains at least partially constant radially outwards and/or increases at least partially radially outwards and wherein the cutting angle (9) between the working edge (11) and the shear edge (12) lies between 80° and 120°.

2. Pulper according to Claim 1, wherein the cutting angle (9) between the working edge (11) and the shear edge (12) remains constant radially outwards over at least 2/3 of the length of the working edge (11).

3. Pulper according to Claims 1 or 2, wherein the cutting angle (9) between the working edge (11) and the shear edge (12) remains constant radially outwards over the entire length of the working edge (11).

4. Pulper according to any one of the preceding claims, wherein the constant cutting angle (9) between the working edge (11) and the shear edge (12) is 90°.

5. Pulper according to Claim 1, wherein the cutting angle (9) between the working edge (11) and the shear edge (12) increases radially outwards over at least 2/3 of the length of the working edge (11).

6. Pulper according to Claim 1, wherein the cutting angle (9) between the working edge (11) and the shear edge (12) increases radially outwards over the entire length of the working edge (11).

7. Pulper according to any one of the preceding claims, wherein the cutting angle (9) between the working edge (11) and the shear edge (12) ranges from 80° to 110°.

8. Pulper according to any one of the preceding claims, wherein the working edge (11) of the rotor blades (7) has an at least predominantly straight profile.

9. Pulper according to any one of Claims 1 to 7, wherein the working edge (11) of the rotor blades (7) is at least predominantly formed by multiple straight sections.

10. Pulper according to any one of Claims 1 to 7, wherein the working edge (11) of the rotor blades (7) has an at least predominantly curved profile.

11. Pulper according to any one of the preceding claims, wherein the width of the elevations (8) in the rotation direction (10) remains constant radially outwards.

12. Pulper according to any one of Claims 1 to 11, wherein the width of the elevations (8) in the rotation direction (10) increases at least partially radially outwards.

13. Pulper according to any one of the preceding claims, wherein at least some elevations (8) extend radially outwards over the entire length of the working edges (11).

14. Pulper according to any one of the preceding claims, wherein the shear edge (12) of at least some elevations (8) is profiled.

15. Pulper according to any one of Claims 1 to 12, wherein the shear edge (12) of the elevations (8) has an at least predominantly curved profile.

## Revendications

1. Désintégrateur pour faire circuler une suspension fibreuse (2) contenue dans une cuve (1) du désintégrateur comprenant au moins un tamis (3) dont la surface de tamisage pourvue d'ouvertures de tamisage (4) est balayée par un rotor (5), le rotor (5) étant formé par une tête de rotor (6) sur la circonférence de laquelle sont fixées plusieurs pales de rotor (7) et la surface circulaire du tamis (3) balayée par les pales de rotor (7) présentant plusieurs parties surélevées (8) en forme de nervures, l'angle de coupe (9) entre l'arête de travail (11) des pales de rotor (7), aménagée dans le sens de rotation (10), et l'arête de cisaillement (12) des parties surélevées (8), aménagée dans le sens opposé au sens de rotation (10), restant constant au moins partiellement et/ou devenant plus grand au moins partiellement, et l'angle de coupe (9) entre l'arête de travail (11) et l'arête de cisaillement (12) étant compris entre 80° et 120°.

2. Désintégrateur selon la revendication 1, dans lequel l'angle de coupe (9) entre l'arête de travail (11) et l'arête de cisaillement (12) reste le même radialement vers l'extérieur sur au moins 2/3 de la longueur de l'arête de travail (11).

3. Désintégrateur selon la revendication 1 ou la revendication 2, dans lequel l'angle de coupe (9) entre l'arête de travail (11) et l'arête de cisaillement (12) reste le même radialement vers l'extérieur sur toute la longueur de l'arête de travail (11).

4. Désintégrateur selon l'une des revendications précédentes, dans lequel l'angle de coupe (9) constant entre l'arête de travail (11) et l'arête de cisaillement (12) est de 90°.

5. Désintégrateur selon la revendication 1, dans lequel l'angle de coupe (9) entre l'arête de travail (11) et l'arête de cisaillement (12) augmente radialement vers l'extérieur sur au moins 2/3 de la longueur de l'arête de travail (11).

6. Désintégrateur selon la revendication 1, dans lequel l'angle de coupe (9) entre l'arête de travail (11) et l'arête de cisaillement (12) augmente radialement vers l'extérieur sur toute la longueur de l'arête de travail (11) .

7. Désintégrateur selon l'une des revendications précédentes, dans lequel l'angle de coupe (9) entre l'arête de travail (11) et l'arête de cisaillement (12) est compris entre 80° et 110°.

8. Désintégrateur selon l'une des revendications précédentes, dans lequel l'arête de travail (11) des pales de rotor (7) est au moins principalement rectiligne.

9. Désintégrateur selon l'une des revendications 1 à 7, dans lequel l'arête de travail (11) des pales de rotor (7) est formée au moins majoritairement par plusieurs sections droites.

10. Désintégrateur selon l'une des revendications 1 à 7, dans lequel l'arête de travail (11) des pales de rotor (7) est au moins principalement incurvée.

11. Désintégrateur selon l'une des revendications précédentes, dans lequel la largeur des parties surélevées (8) reste la même radialement vers l'extérieur, dans le sens de rotation (10).

12. Désintégrateur selon l'une des revendications 1 à 11, dans lequel la largeur des parties surélevées (8) augmente radialement vers l'extérieur, au moins par sections, dans le sens de rotation (10).

13. Désintégrateur selon l'une des revendications précédentes, dans lequel au moins certaines des parties surélevées (8) s'étendent radialement vers l'extérieur sur toute la longueur des arêtes de travail (11).

14. Désintégrateur selon l'une des revendications précédentes, dans lequel l'arête de cisaillement (12) d'au moins certaines des parties surélevées (8) est formée de manière profilée.

15. Désintégrateur selon l'une des revendications 1 à 12, dans lequel l'arête de cisaillement (12) des parties surélevées (8) est au moins principalement incurvée.
